# EUROPEAN PATENT SPECIFICATION

(11) **EP 2 103 649 B1**
(45) Date of publication and mention of the grant of the patent: **19.09.2012**
(21) Application number: 07851115.1
(22) Date of filing: 20.12.2007
(51) Int. Cl.: C08L 9/00, C08K 3/00, C08K 3/34, C08K 5/548, C08K 7/22, C08K 3/36, B60C 1/00, B60C 11/14

(54) **RUBBER COMPOSITION FOR TIRE**
KAUTSCHUKZUSAMMENSETZUNG FÜR REIFEN
COMPOSITION DE CAOUTCHOUC POUR PNEUS

(30) Priority: 26.12.2006 JP 2006349710; 28.09.2007 JP 2007255661
(43) Date of publication of application: 23.09.2009
(73) Proprietor: The Yokohama Rubber Co., Ltd., Tokyo 105-8685 (JP)
(72) Inventor: TAKEUCHI, Masakazu, Hiratsuka-shi Kanagawa 254-8601 (JP); MORI, Makio, Hiratsuka-shi Kanagawa 254-8601 (JP)
(74) Representative: Vossius & Partner
(86) International application number: PCT/JP2007/075227
(87) International publication number: WO 2008/078822

(56) References cited:
- WO-A1-2005/047028
- JP-A- 11 140 426
- JP-A- 2001 288 306
- JP-A- 2005 281 387
- JP-A- 2006 241 342
- JP-A- 2006 265 312
- US-A1- 2003 036 599
- DATABASE WPI Week 198342 Thomson Scientific, London, GB; AN 1983-791351 XP002632021, -& JP 58 151360 A (JUJO PAPER CO LTD) 8 September 1983 (1983-09-08)
- KENNETH R. ENGH: "Diatomite", KIRK-OTHMER ENCYCLOPEDIA OF CHEMICAL TECHNOLOGY, 4 December 2000 (2000-12-04), - 4 December 2000 (2000-12-04), pages 1-9, XP002632022, DOI: 10.1002/0471238961.040901200514070

## Description

### TECHNICAL FIELD

The present invention relates to a rubber composition for a tire, more specifically relates to a rubber composition for a tire capable of improving ice traction, without decreasing the abrasion resistance and strength, in particular suitable for use for treads of studless tires for snow-covered or icy roads.

### BACKGROUND ART

In rubber compositions for studless tires, the clawing effects due to formulations including high hardness particles are being studied. Further, at the same time, formulations including porous material particles are being selected to improve wet-on-ice performance. However, there is a problem in that the introduction of a large amount of these particles will lead to worsening of the abrasion resistance, decrease in the strength, etc. of the rubber. As a porous material, diatomaceous earth is known as an inexpensive porous substance, but there is also a problem that the strength of the rubber is decreased.

For example, Japanese Patent Publication No. 9-302153 A etc. try to mix various high hardness materials into tread rubber and utilize the clawing effects of these in the high hardness materials on the surface of the ice to realize ice traction of the tread rubber. However, the method of mixing high hardness materials having high clawing effects into the matrix rubber of tire treads has the disadvantages that the effect of improvement of ice performance near 0°C, where the moisture content is large, is small and further that the high hardness materials are present as foreign matter having no affinity with the rubber, and therefore the decreases in the abrasion resistance and breakage properties are remarkable.

Further, the treads of studless tire have fine grooves called "sipes" cut into them for the improvements in the performance on snow-covered or icy road surfaces. Sipes are designed to improve the performance, but provision of sipes results in the decrease in the rigidity of the tread. Further, during braking, etc., the sipes themselves collapse, and therefore there is the problem that the desired effects cannot be exhibited. This problem may be avoided by hardening the rubber for treads, however, it is well known that simply hardening the rubber caused worse performance on snow-covered or icy road surfaces.

### DISCLOSURE OF THE INVENTION

Accordingly, an object of the present invention is to improve the ice traction of the rubber composition, without causing the decrease in abrasion resistance or strength.

In accordance with the present invention, there is provided a rubber composition for a tire comprising (1) 100 parts by weight of a rubber component of natural rubber and/or a diene-based synthetic rubber and (2)(a) 0.5 to 40 parts by weight of cylindrical or columnar shaped porous diatomaceous earth having a cylinder or column height of 100 µm or less and (b) (i) carbon black and/or (ii) silica, wherein the total amount of the components (a) and (b) is 40 to 80 parts by weight.

According to the present invention, by compounding the above-mentioned specific porous diatomaceous earth in a rubber composition, ice traction can be improved, without deterioration of the abrasion resistance of the rubber and the decrease in the strength thereof.

### BEST MODE FOR CARRYING OUT THE INVENTION

The present inventors found that a formulation taking note of the nonlinearity of rubber to elongation, that is, a formulation capable of increasing the elastic modulus at the time of relatively high elongation, while maintaining a low hardness, enables the above problem to be solved. Further, we found that it is possible to obtain such a rubber composition by formulating porous diatomaceous earth having the above specific shapes.

As the rubber components to be formulated into the rubber composition of the present invention, natural rubber (NR) and/or diene-based synthetic rubbers such as polyisoprene rubber (IR), polybutadiene rubber (BR), styrene-butadiene copolymer rubber (SBR) may be used. These rubbers may be used alone or in any mixtures thereof.

According to the present invention, it is possible to obtain the desired rubber composition for a tire by compounding, to (1) 100 parts by weight of a rubber component of natural rubber and/or diene-based synthetic rubber, (2)(a) 0.5 to 40 parts by weight, preferably 2 to 40 parts by weight, of a cylindrical or columnar shaped porous diatomaceous earth having a cylinder or column height of 100 µm or less and (b) (i) carbon black and/or (ii) silica, so that the total amount of components (a) and (b) is 40 to 80 parts by weight, preferably 40 to 60 parts by weight.

If the amount of the porous diatomaceous earth (a) used in the present invention is small, the resultant effect is liable to become small, and therefore, this is not preferred. Conversely, if large, the decrease in the breakage properties etc. is liable to become unacceptable, and therefore, this is also not preferred.

The carbon black usable in the present invention is not particularly limited. Any carbon black may be used, however, carbon black having an N₂SA (measured based on JIS K 6217-2:2001) of 80 m²/g or more and an amount of adsorbed DBP (measured based on JIS K 6217-4:2001) of 100 ml/100 g or more is preferable. Further, silica may be compounded into the rubber composition. For example, any silica such as wet silica or dry silica may be used, however silica having a BET specific surface area (measured based on ASTM D3037) of 100 to 200 m²/g is preferable. The carbon black (b)(i) and silica (b) (ii) are compounded, as the total amount with the component (a), in an amount of 40 to 80 parts by weight, based upon 100 parts by weight of the rubber component. If the amount is small, the reinforcibility will become too low, and therefore, this is not preferable, while conversely if large, the hardness will become too high, and therefore, this also is not preferable

In a preferable mode of the present invention, 0.5 to 40 parts by weight, preferably 2 to 40 parts by weight, more preferably 3 to 25 parts by weight, of cylindrical or columnar shaped porous diatomaceous earth having a cylinder or column height of 100 µm or less, preferably 1 to 30 µm, is compounded to 100 parts by weight of the rubber. The cylindrical or columnar shaped porous diatomaceous earth usable in the present invention preferably has an L/D ratio, where the cylinder or column height is L and the diameter of the bottom is D, of 0.2 to 3.0, more preferably 0.3 to 2.0. Specifically, for example, Melosira porous diatomaceous earth corresponds to this. The majority of porous diatomaceous earth generally available for applications in horticulture is flat porous diatomaceous earth. Cylindrical shapes are special.

Diatomaceous earth is comprised of the remains of single-celled diatoms that had inhabited lakes and oceans in primitive times. The diatoms suitable for use in the present invention are of the type called Melosira Granulata Curbata, which has a uniformly porous and unique honeycomb structure. A typical chemical composition thereof is SiO₂ (89.2%), Al₂O₃ (4.0%), Fe₂O₃ (1.5%), CaO (0.5%) and MgO (0.3%). This diatomaceous earth is known and commercially available. The present invention may use such commercially available products.

In the rubber composition of the preferable aspect of the present invention, from the viewpoint of making a tire flexibly contact a road surface even at a low temperature, silica can be compounded into 100 parts by weight of the rubber component in an amount of preferably 0.05 to 30 parts by weight, more preferably 5 to 25 parts by weight.

In the rubber composition of the present invention, for the purpose of improving the reinforcibility of the porous diatomaceous earth and silica, it is preferable to compound a silica coupling agent in an amount of 6 to 10 % by weight, based upon the weight of the porous diatomaceous earth (a) and silica (b) (ii). As the silica coupling agent, bis-(3-triethoxysilylpropyl)polysulfide, etc. are preferably used. Commercially available products such as Si69 made in Degussa may be used.

In the rubber composition of the present invention, heat expandable microcapsules may be compounded into 100 parts by weight of the rubber in an amount of 1 to 15 parts by weight, more preferably 1 to 7 parts by weight, so as to further improving the clawing effect of the porous diatomaceous earth particles.

The heat expandable microcapsules are heat expandable thermoplastic resin particles, in which a liquid capable of, vaporizing due to heat to generate a gas is enclosed in a thermoplastic resin. The particles are heated at a temperature greater than the temperature at the start of expansion, normally 140 to 190°C, to be expanded to thereby obtain gas-enclosing thermoplastic resin particles comprised of outer shells comprising that thermoplastic resin, in which a gas is enclosed. The particle size of the gas-enclosing thermoplastic resin particles is preferably 5 to 300 µm, more preferably 10 to 200 µm.

Such heat expandable microcapsules (i.e., heat expandable thermoplastic resin particles) are, for example, currently available from Sweden's EXPANCEL as "Expancel 091DU-80" or "Expancel 092DU-120" or from Matsumoto Yushi Seiyaku as "Matsumoto Microsphere F-85" or "Matsumoto Microsphere F-100".

As the thermoplastic resin forming the outer shell component of the gas-enclosing thermoplastic resin particles, for example, a polymer of (meth)acrylonitrile or a copolymer thereof having a high (meth)acrylonitrile content is preferably used. As the other monomers (i.e., comonomers) in the case of copolymers, monomers such as a vinyl halide, vinylidene halide, styrene monomer, (meth)acrylate monomer, vinyl acetate, butadiene, vinylpyridine, chloroprene are used. Note that said thermoplastic resin may be made cross-linkable with a cross-linking agent such as divinylbenzene, ethyleneglycol di(meth)acrylate, triethyleneglycol di(meth)acrylate, trimethylolpropane tri(meth)acrylate, 1,3-butylene glycol di(meth)acrylate, allyl(meth)acrylate, triacrylformal, triallylisocyanurate. For the cross-linking mode, the use of not yet cross-linked monomer is preferable, however, the resin may be partially cross-linked to an extent not detracting from the properties as a thermoplastic resin.

As the liquid capable of vaporizing due to heat to generate a gas, for example, hydrocarbons such as n-pentane, isopentane, neopentane, butane, isobutene, hexane, petroleum ether, chlorinated hydrocarbons such as methyl chloride, methylene chloride, dichloroethylene, trichloroethane, trichloroethylene may be mentioned.

In the rubber composition of the present invention, in addition to the aforementioned components, various additives such as other reinforcing agents (i.e., fillers), vulcanization or cross-linking agents, vulcanization or cross-linking accelerators, various types of oils, antioxidants, plasticizers, which are generally used for tires and other rubber compositions may be compounded. These additives are mixed by general methods to obtain compositions which may be used for vulcanization or cross-linking. The amounts of these additives may also be made the conventional general compounding amounts so far as not adversely affecting to the object of the present invention.

### EXAMPLES

Examples will now be used to further explain the present invention, however, the scope of the present invention is not limited to these Examples.

### Examples 1 to 9 and Comparative Examples 1 to 9

### Preparation of Samples

In each of the formulations shown in Table I, the ingredients other than the vulcanization accelerator, sulfur and heat expandable microcapsules were mixed in a 1.7 liter internal mixer for 4 minutes and discharged when reaching 150°C to obtain a master batch. This master batch was mixed with the vulcanization accelerator, sulfur, and heat expandable microcapsules by an open roll to obtain a rubber composition.

Next, the rubber composition thus obtained was press vulcanized in a predetermined mold at 160°C for 15 minutes to prepare a vulcanized rubber sheet, which was then determined for the physical properties of the vulcanized rubber using the test methods shown below. The results are shown in Table I.

### Test Methods for Evaluation of Rubber Physical Properties

### Hardness

The hardness at 0°C was determined based on JIS K 6253. The results are shown, indexed to the values of Comparative Example 1 or 4 as 100, in Table I. The larger the value, the higher the hardness.

### 300% modulus and strength at break

The stress at 300% elongation determined based on JIS K 6251 is shown as the "300% modulus". Further, the load at break during the same test is shown as the "strength at break". Each are shown in Table I. The results are shown, indexed to the values of Comparative Example 1 or 4 as 100, in Table I. The larger the value, the higher the reinforcibility.

### Abrasion resistance

A Lambourn abrasion tester (made by Iwamoto Seisakusho) is used to determine the resistance under the conditions of a load of 5 kg (=49N), slip ratio of 25%, a time of 4 minutes and room temperature. The results are shown, indexed to the values of Comparative Example 1 or 4 as 100, in Table I. The larger the value, the more superior the abrasion resistance.

### Ice traction coefficient (inside drum test)(see Japanese Patent Publication No. 2001-288306A)

A sheet obtained by vulcanization of each compound was attached to a base rubber having a flattened columnar shape and was measured using an inside drum type ice traction tester at a measurement temperature of -3.0°C, a load of 5.5 kg/cm² (approximately 0.54 MPa) and a drum speed of 25 km/h. The results are shown, indexed to the values of Comparative Example 1 or 4 as 100, in Table I. The larger the value, the more superior the traction of the rubber on ice.

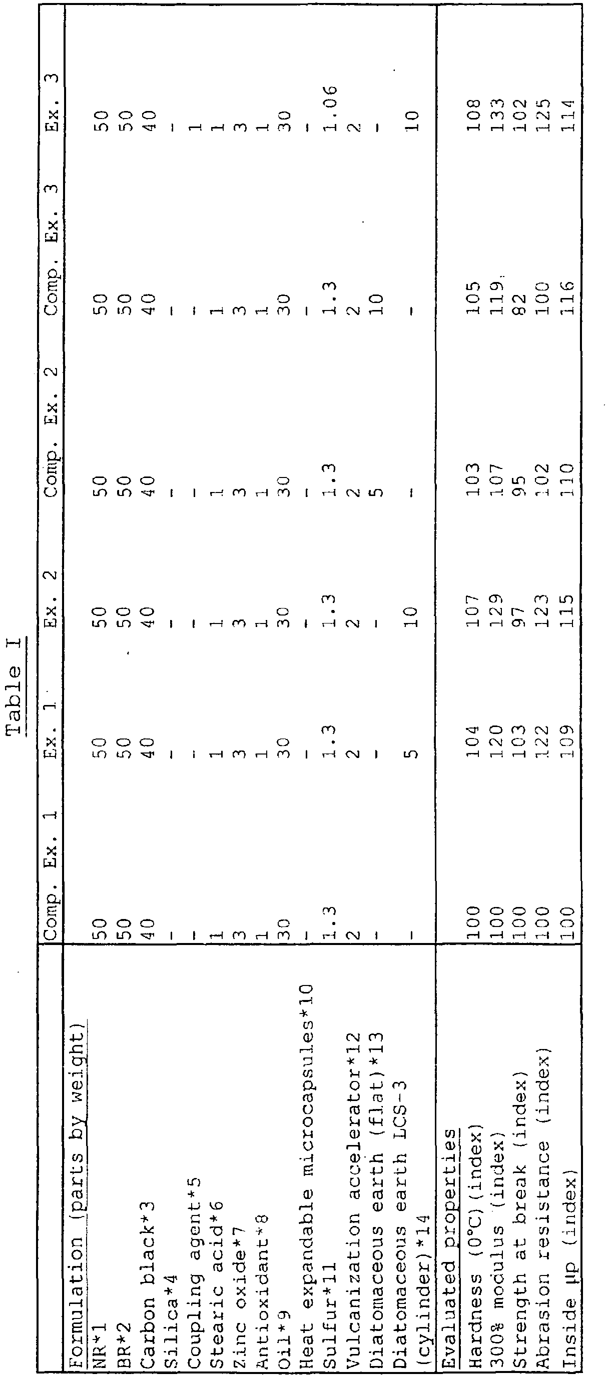

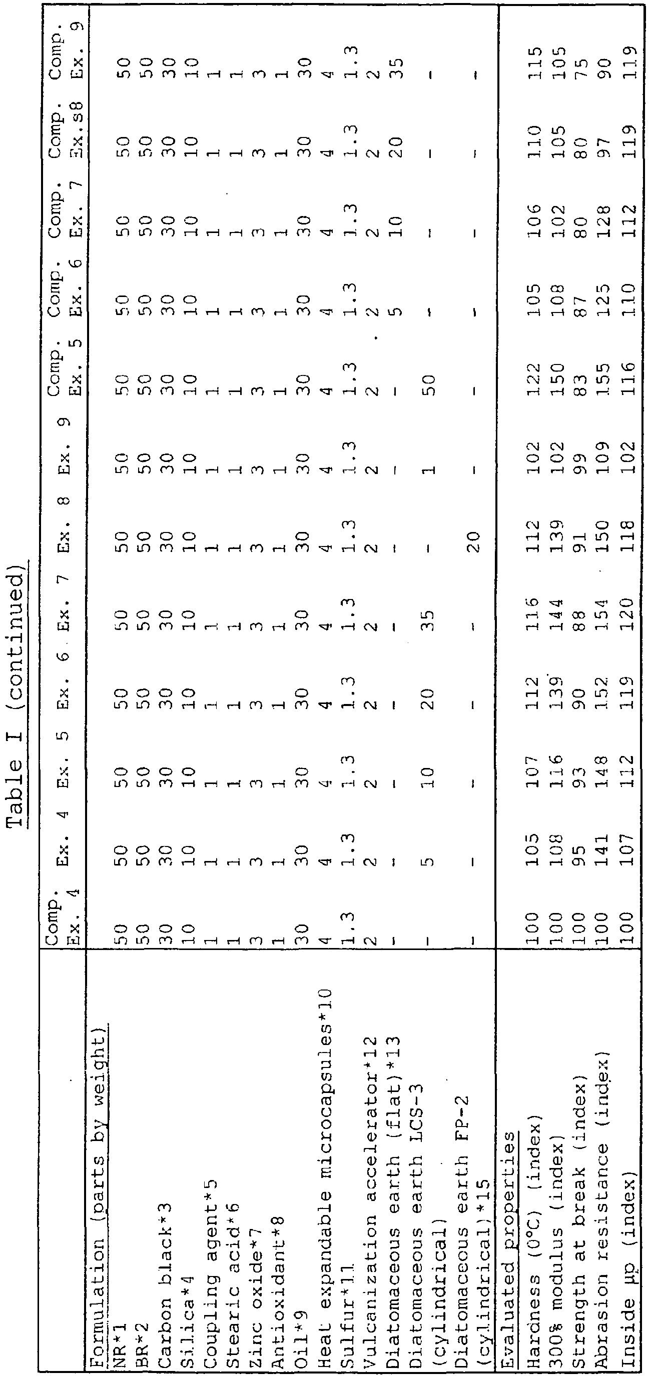

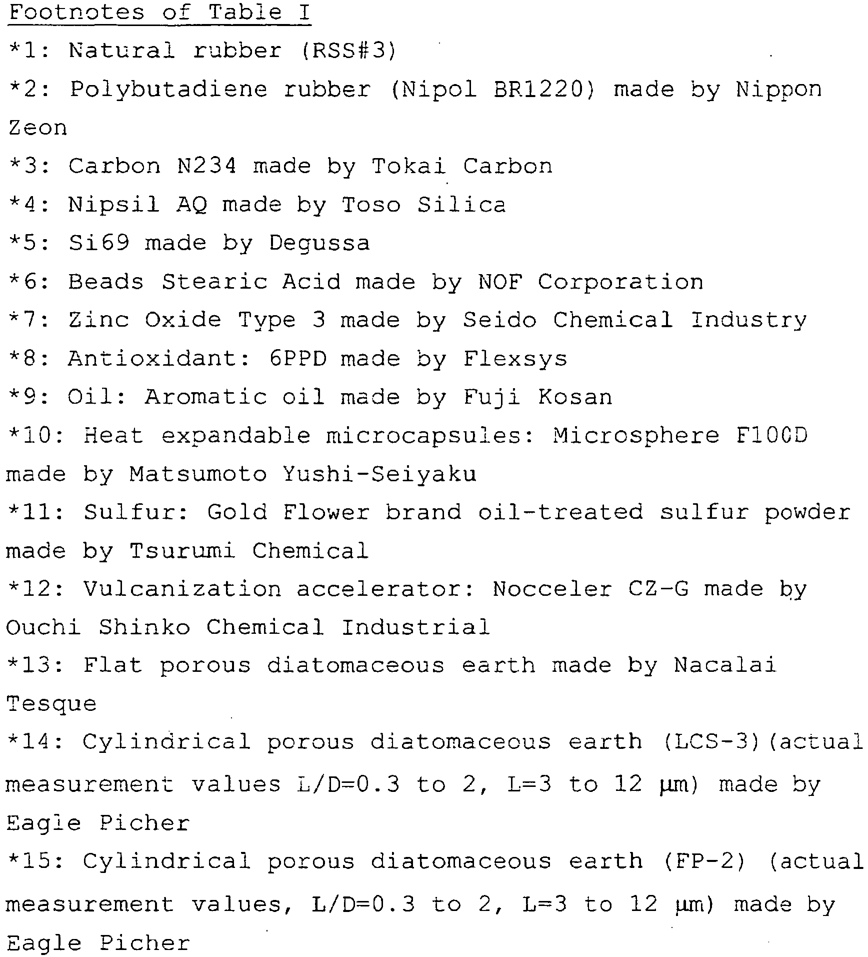

As is clear from the results of Table I, ice traction is improved by compounding either cylindrical porous diatomaceous earth or flat porous diatomaceous earth. However, Examples 1 to 3 or Examples 4 to 8 containing cylindrical porous diatomaceous earth are improved in abrasion resistance and 300% modulus in comparison to Comparative Examples 1 or 4, but Comparative Examples 2 to 3 or Comparative Examples 6 to 9 containing flat porous diatomaceous earth are inferior in abrasion resistance, 300% modulus, and strength at break compared to Examples 1 to 3 or Examples 4 to 8 containing the same amount of cylindrical porous diatomaceous earth despite the hardness being equivalent. Note that, by compounding porous diatomaceous earth, the strength at break will be decreased somewhat, but this can be improved by adding a coupling agent (see Example 3).

In Comparative Example 5 compounded with 50 parts by weight of cylindrical porous diatomaceous earth, the hardness is too high, and therefore the ice traction is decreased and the decrease in the strength at break is greater than in Example 7 containing 35 parts by weight.

### Preparation of Samples for Examples 10 to 14 and Comparative Examples 10 to 14

In each of the formulations shown in Table II, the ingredients other than the vulcanization accelerator and sulfur were mixed in a 1.7 liter internal mixer for 4 minutes and discharged when reaching 150°C to obtain a master batch. This master batch was mixed with the vulcanization accelerator and sulfur by an open roll to obtain a rubber composition.

Next, the rubber composition thus obtained was press vulcanized in a predetermined mold at 160°C for 15 minutes to prepare a vulcanized rubber sheet, which was then determined for the physical properties of the vulcanized rubber using the test methods shown below. The results are shown in Table II.

### Test Methods for Evaluation of Rubber Physical Properties

### Hardness

The hardness at 0°C was determined, based on JIS K 6253. The results are shown, indexed to the values of Comparative Example 10 or 14 as 100, in Table II. The larger the value, the higher the hardness.

### 100% modulus and strength at break

The stress at 100% elongation determined based on JIS K 6251 is shown as the "100% modulus", while the load at break during the same test is shown as the "strength at break". Each are shown in Table I. The results are shown, indexed to the values of Comparative Example 10 or 14 as 100, in Table II. The larger the value, the higher the reinforcibility.

### Ice traction coefficient (i.e., inside drum test) (see Japanese Patent Publication No. 2001-288306A)

A sheet obtained by vulcanization of each compound was attached to a base rubber having a flattened columnar shape and was determined using an inside drum type ice traction tester at a measurement temperature of -3.0°C, and a speed of 5.5 kg/cm² load (approximately 0.54 MPa), and a 25 km/h drum speed. The results are shown, indexed to the values of Comparative Example 10 or 14 as 100, in Table II. The larger the value, the more superior the traction of the rubber on ice.

**Table II**

| | Comp. Ex. 10 | Ex. 10 | Ex. 11 | Comp. Ex. 11 | Comp. Ex. 12 | Comp. Ex. 13 | Comp. Ex. 14 | Ex. 12 | Ex. 13 | Ex. 14 |
|---|---|---|---|---|---|---|---|---|---|---|
| Formulation (parts by weight) | | | | | | | | | | |
| NR*1 | 47 | 47 | 47 | 47 | 47 | 47 | 47 | 47 | 47 | 47 |
| BR*2 | 53 | 53 | 53 | 53 | 53 | 53 | 53 | 53 | 53 | 53 |
| Carbon black*3 | 34 | 34 | 34 | 34 | 34 | 32 | 51 | 35 | 35 | 35 |
| Silica 4 | 17 | 14 | 12 | 14 | 12 | - | - | - | - | - |
| Coupling agent*5 | 1.3 | 1.3 | 1.3 | 1.3 | 1.3 | - | - | 0.8 | 1.3 | 1.7 |
| Stearic acrid*6 | 1 | 1 | 1 | 1 | 1 | 1 | 1 | 1 | 1 | 1 |
| Zinc oxide*7 | 3 | 3 | 3 | 3 | 3 | 3 | 3 | 3 | 3 | 3 |
| Antioxidant*8 | 1 | 1 | 1 | 1 | 1 | 1 | 1 | 1 | 1 | 1 |
| Oil*9 | 21 | 21 | 21 | 21 | 21 | 21 | 21 | 21 | 21 | 21 |
| Sulfur*10 | 1.3 | 1.3 | 1.3 | 1.3 | 1.3 | 1.6 | 1.6 | 1.4 | 1.3 | 1.2 |
| Vulcanization accelerator*11 | 2 | 2 | 2 | 2 | 2 | 2 | 2 | 2 | 2 | 2 |
| Diatomaceous earth (flat)*13 | - | - | - | 4 | 8 | - | - | - | - | - |
| Diatomaceous earth LCS-3 | - | 4 | 8 | - | - | 4 | - | 17 | 17 | 17 |
| (cylindrical) | | | | | | | | | | |

| Evaluated properties | | | | | | | | | | |
|---|---|---|---|---|---|---|---|---|---|---|
| Hardness (0°C) | 100 | 100 | 99 | 99 | 98 | 82 | 100 | 98 | 99 | 100 |
| 100% modulus | 100 | 103 | 114 | 102 | 105 | 77 | 100 | 112 | 134 | 162 |
| Strength at break | 100 | 100 | 98 | 95 | 82 | 70 | 100 | 94 | 97 | 99 |
| Inside µp | 100 | 110 | 116 | 109 | 115 | 115 | 100 | 119 | 120 | 120 |

| | | | | | | | | | | |
|---|---|---|---|---|---|---|---|---|---|---|
| Footnotes of Table II. *1: Natural rubber (RSS#3) *2: Polybutadiene rubber (Nipol BRX5000) made by Nippon Zeon *3: Carbon N234 made by Tokai Carbon *4: Nipsil AQ made by Toso Silica *5: Si69 made by Degussa *6: Beads Stearic Acid made by NOF Corporation *7: Zinc Oxide Type 3 made by Seido Chemical Industry *8: Antioxidant: 6PPD made by Flexsys *9: Oil: Aromatic oil made by Fuji Kosan *10: Sulfur: Gold Flower brand oil-treated sulfur powder made by Tsurumi Chemical *11: Vulcanization accelerator: Nocceler CZ-G made by Ouchi Shinko Chemical Industrial *12: Flat porous diatomaceous earth purchased as test reagents from Nacalai Tesque *13: Cylindrical porous diatomaceous earth (LCS-3) (actual measurement values L/D=0.3 to 2, L=3 to 12 µm) made by Eagle Picher | | | | | | | | | | |

Ice traction is improved by compounding either the diatomaceous earth A or the diatomaceous earth B, however, Examples 10 to 11 containing the diatomaceous earth B is improved in the 100% modulus in comparison to Comparative Examples 11 to 12. Comparative Example 13 has a low compounding amount of filler, and therefore, there is the problem that the 100% modulus is too small and the steering stability is inferior. When comparing Comparative Example 14 and Example 12, in formulations containing large amounts of diatomaceous earth, the ice surface µ is improved, but the decrease in the breakage properties is somewhat high. From Example 13, making the amount of the coupling agent at least 6 % by weight of the total amount of diatomaceous earth and silica is more preferable. However, formulations containing this in large amounts are difficult in terms of cost.

### INDUSTRIAL APPLICABILITY

According to the present invention, by compounding a specific porous diatomaceous earth, the rubber composition can be improved in ice traction, without causing the decrease in the abrasion resistance or strength and can be used for treads of studless tires.

## Claims

1. A rubber composition for a tire comprising (1) 100 parts by weight of a rubber component of natural rubber and/or diene-based synthetic rubber and (2) (a) 0.5 to 40 parts by weight of a cylindrical or columnar shaped porous diatomaceous earth having a cylinder or column height of 100 µm or less and (b)(i) carbon black and/or (ii) silica, wherein the total amount of the component (a) and (b) is 40 to 80 parts by weight.

2. A rubber composition for a tire as claimed in claim 1, wherein an L/D ratio, where L is the cylinder or column height and D is a diameter of the bottom surface, is 0.2 to 3.0.

3. A rubber composition for a tire as claimed in claim 1 or 2, wherein said porous diatomaceous earth is Melosira porous diatomaceous earth.

4. A rubber composition for a tire as claimed in any one of claims 1 to 3, wherein the amount of silica is 0.05 to 30 parts by weight, based upon 100 parts by weight of the rubber component.

5. A rubber composition for a tire as claimed in any one of claims 1 to 4, further comprising 6 to 10 % by weight of a silica coupling agent, based upon the weight of the porous diatomaceous earth (a) and silica (b)(ii).

6. A rubber composition for a tire as claimed in any one of claims 1 to 5, further comprising 1 to 15 parts by weight of heat expandable microcapsules, based upon 100 parts by weight of the rubber.

## Patentansprüche

1. Eine Kautschukzusammensetzung für einen Reifen, umfassend (1) 100 Gewichtsteile eines Kautschukbestandteils eines Naturkautschuks und/oder eines synthetischen Kautschuks auf Dien-Basis und (2) (a) 0,5 bis 40 Gewichtsteile an zylindrisch oder säulenförmig geformter, poröser Diatomeenerde, die eine Zylinder- oder Säulenhöhe von 100 µm oder weniger aufweist und (b) (i) Ruß und/oder (ii) Siliciumdioxid, wobei die Gesamtmenge der Bestandteile (a) und (b) 40 bis 80 Gewichtsteile beträgt.

2. Die Kautschukzusammensetzung für einen Reifen wie in Anspruch 1 beansprucht, wobei das L/D Verhältnis, wobei L die Zylinder- oder Säulenhöhe und D der Durchmesser der Grundfläche ist, 0,2 bis 3,0 beträgt.

3. Eine Kautschukzusammensetzung für einen Reifen wie in Anspruch 1 oder 2 beansprucht, wobei die poröse Diatomeenerde eine poröse Diatomeenerde der Form Melosira ist.

4. Eine Kautschukzusammensetzung für einen Reifen wie in einem der Ansprüche 1 bis 3 beansprucht, wobei die Menge an Siliciumdioxid 0,05 bis 30 Gewichtsteile beträgt, basierend auf 100 Gewichtsteilen des Kautschukbestandteils.

5. Eine Kautschukzusammensetzung für einen Reifen wie in einem der Ansprüche 1 bis 4 beansprucht, ferner umfassend 6 bis 10 Gewichtsprozent eines Siliciumdioxidkupplungsmittels, basierend auf dem Gewicht der porösen Diatomeenerde (a) und des Siliciumdioxids (b) (ii).

6. Eine Kautschukzusammensetzung für einen Reifen wie in einem der Ansprüche 1 bis 5 beansprucht, ferner umfassend 1 bis 15 Gewichtsteile an wärmeexpandierbaren Mikrokapseln, basierend auf 100 Gewichtsteilen des Kautschuks.

## Revendications

1. Composition de caoutchouc pour un pneu comprenant (1) 100 parties en poids d'un composant de caoutchouc de caoutchouc naturel et/ou de caoutchouc synthétique à base de diène et (2) (a) de 0,5 à 40 parties en poids d'une terre de diatomée poreuse de forme cylindrique ou colonnaire ayant une hauteur de cylindre ou de colonne de 100 µm ou moins et (b) (i) du noir de carbone et/ou (ii) de la silice, dans laquelle la quantité totale des composants (a) et (b) est de 40 à 80 parties en poids.

2. Composition de caoutchouc pour un pneu selon la revendication 1, dans laquelle un rapport L/D, où L est la hauteur du cylindre ou de la colonne et D est un diamètre de la surface du fond, est de 0,2 à 3,0.

3. Composition de caoutchouc pour un pneu selon la revendication 1 ou 2, dans laquelle ladite terre de diatomée poreuse est la terre de diatomée poreuse de Melosira.

4. Composition de caoutchouc pour un pneu selon l'une quelconque des revendications 1 à 3, dans laquelle la quantité de silice est de 0,05 à 30 parties en poids, sur la base de 100 parties en poids de composant de caoutchouc.

5. Composition de caoutchouc pour un pneu selon l'une quelconque des revendications 1 à 4, comprenant en outre de 6 à 10 % en poids d'un agent de couplage de silice, sur la base du poids de la terre de diatomée poreuse (a) et de la silice (b) (ii).

6. Composition de caoutchouc pour un pneu selon l'une quelconque des revendications 1 à 5, comprenant en outre de 1 à 15 parties en poids de microcapsules extensibles à la chaleur, sur la base de 100 parties en poids de caoutchouc.
